# EUROPEAN PATENT SPECIFICATION

(11) **EP 3 767 767 B1**
(45) Date of publication and mention of the grant of the patent: **09.07.2025**
(21) Application number: 20186135.8
(22) Date of filing: 16.07.2020
(51) Int. Cl.: H02G 3/08, H02G 3/12

(54) **CORNER BOX ASSEMBLY**
ANSCHLUSSKASTENANORDNUNG FÜR ECKEN
ENSEMBLE DE BOÎTE D'ANGLE

(30) Priority: 17.07.2019 IN 201931028748
(43) Date of publication of application: 20.01.2021
(73) Proprietor: Schneider Electric Industries SAS, 92500 Rueil-Malmaison (FR)
(72) Inventor: CHATTERJEE, Deepak, 560048 Bangalore (IN); VARGHESE, Jerry, 682020 Kerala (IN); SVÄRD, Alexander, 117 56 Stockholm (SE)
(74) Representative: Swea IP Law AB

(56) References cited:
- US-A1- 2011 290 625
- US-B1- 6 576 835
- US-B1- 8 212 144
- US-B2- 9 553 433

## Description

### Field of invention

The present invention relates to a corner box assembly intended to mount at the surface where the wall meets the floor of a room for housing electrical sockets, switches and cables. This invention provides users with a modular corner box that can be assembled on site i.e. a corner box with modularity in its design. This invention also provides a provision whereby users can increase or decrease the length of said corner box based on their requirements.

### Background of the invention

Corner boxes are used in places where typically plugging or unplugging is done frequently from a working height. Some common examples are at the working area in kitchen or kitchen bench (either in corner or underneath the upper locker-section), in the corner besides an office desk, PC desk at home and also in hotels.

In the present scenario, the conventional corner boxes come with a single module or dual module design. The corner boxes with a single module design can house one switch or a socket and the corner boxes with a two modular design can house or assemble utmost two switches or sockets.

Currently there are no product in market that gives the user or installer a provision to accommodate one switch and two sockets or two switches and three sockets. In other words, if the user wants to assemble a corner box based on his/her requirement the existing corner boxes that are available in the market won't fulfil those requirements.

At present with the existing corner box it is possible to assemble either one switch or one socket with one module design and two switches or two socket outlets with a two module design. Hence if a customer or user wants to install three module sizes then he/she is left with no products to achieve this combination.

Certain prior art documents discloses various corner box assemblies for housing electrical cables. A prior art document EP 1953887 discloses a box for wall mounting electrical apparatus and modular arrangement comprising said box. But the invention disclosed in EP 1953887 doesn't provide the user a means to assemble i.e. to increase or decrease the length of the corner box assembly based on the requirements.

The inventors have now developed another type of corner box which can be easily used for corner application. The present invention provides the users with a built-on-site corner box assembly. The said assembly can be assembled during the installation stage and with this it is possible to include any number of electrical sockets and switches. The corner box assembly in the present invention gives a provision to install the box the meeting portion of floor and wall where the surfaces are perpendicular to each other. The corner box can be easily assembled with multiple numbers of modules. The user can assemble the corner box with bare hands and is very compact in size. This corner box assembly achieves user configuration based on modularity requirement which accommodate wall variation due to its snapping mechanism. US8212144B1 discloses a gangable modular electrical box including separate modules that can be combined in various configurations to provide a desired amount of electrical enclosures on a wall. The modules include an end module and an optional inner module that are each molded in one piece of plastic. The modules are screwed together.

US2011290625A1 discloses a universal electrical box which comprises a body having at least one opening for receiving an electrical device. There is also at least one opening for receiving electrical wiring from building wiring. The device can also include at least one mounting bracket coupled to the body, and at least one frame configured to be coupled to the at least one body.

US6576835B1 discloses a multiple gang junction box assembly includes a main box and wire clamping devices disposed in an interior chamber of and attached to the main box.

US9553433B2 discloses a gangable electrical box includes a U-shaped box member having a generally rectangular back wall including opposed back wall ends. An end wall extends from each of the back wall ends. Each of the end walls has opposed longitudinal edges. The gangable box further includes a pair of generally rectangular side walls where each side wall has opposed side wall ends. The side wall ends are attachable to the U-shaped box member to define an open ended box interior.

### Summary of the invention

Accordingly the present invention provides, a corner box assembly for housing electrical components, said corner box assembly being according to claim 1. It comprises notably:
- at least two end parts comprising a first end part and a second end part, said first end part is of matching profile with said second end part to removably attach with each other and thereby form said corner box;
- one or more mid parts assembled in-between said end parts, said mid parts are adapted to attach with said end parts and thereby increasing the length of the corner box assembly; and
- mid walls butted onto said mid parts by grooved lap joint for reinforcing said corner box assembly;

wherein said end parts and mid parts are configured to engage with adjoining mid parts or end parts by means on at least one locking arrangement,
wherein said locking arrangement comprises linear fixing snaps provided at top and bottom end of the mid parts and end parts; and adjustable fixing snaps provided at end parts and mid parts for rigid fixation of higher modularity.

According to the invention, said mid parts are provided with at least two engaging edges for engaging with an adjoining end part or mid part.

According to the invention, said engaging edges of said mid parts comprise linear fixing snaps protruding in an outwardly manner and receiving slots to engage with said linear fixing snaps and adjustable fixing snaps protruding in an outwardly manner to engage with said receiving slots of said adjoining end part or mid part.

According to the invention said end parts comprising the first and second end part are provided with at least an engaging edge for engaging with an adjoining end part or mid part.

According the invention, said engaging edge of the second end part and engaging edge of the first end part is provided with said adjustable fixing snaps protruding in an outwardly manner and receiving slots to engage with said adjustable fixing snaps and linear fixing snaps to engage with said receiving slots of said adjoining end part or mid part.

According to one embodiment of the invention said receiving slots are staple-like receiving slots.

According to the invention said mid parts are provided with corrugated mounting means at the top and bottom inner walls for arresting said mid walls.

According to the invention, said mid parts and end parts are provided with knock outs, when cut open, act as provision for inserting cables and conduits.

With the locking arrangements being perpendicular to the wall, the corner box can be installed easily even with variation in thickness of the wall.

### Brief description of the drawings

For better understanding an illustrative embodiment of the invention will now be described with reference to the accompanying drawings. It will however be appreciated that the embodiment exemplified in the drawings is merely illustrative and not limitative to the scope of the invention.
Figure 1 depicts the front perspective view of the invented corner box with a single module.
Figures 2(a) and 2(b) depict the snap fit locking arrangements provided for attaching two components of the corner box assembly.
Figure 3 illustrates the alignment of the two end parts of the of the invented corner box for the snapping members to latch with their corresponding receiving member.
Figures 4(a), 4(b) and 4(c) depict the perspective view of the end part, mid part and mid wall respectively.
Figure 5 shows the assembled view of the corner box assembly with a mid part interposed between two end parts.
Figure 6 shows the exploded view of the corner box assembly with a mid part interposed between two end parts.
Figure 7 shows the assembled view of the corner box assembly with a plurality of mid parts interposed between two end parts.
Figure 8 shows the exploded view of the corner box assembly with a plurality of mid parts interposed between two end parts.
Figure 9 is an illustrative block diagram showing the modularity in the assembly of the mid parts and end parts in said corner box assembly.

### Detailed description of the drawings

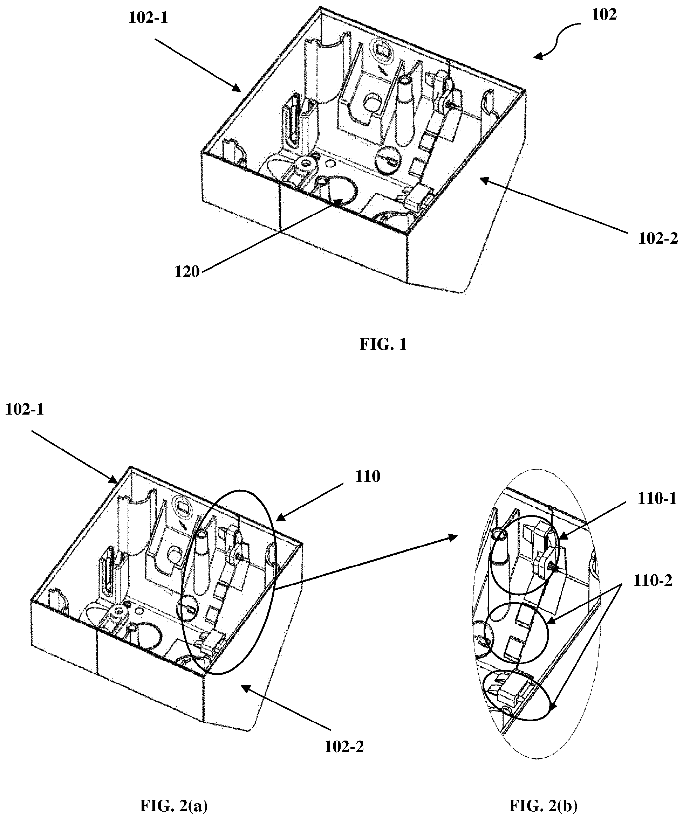

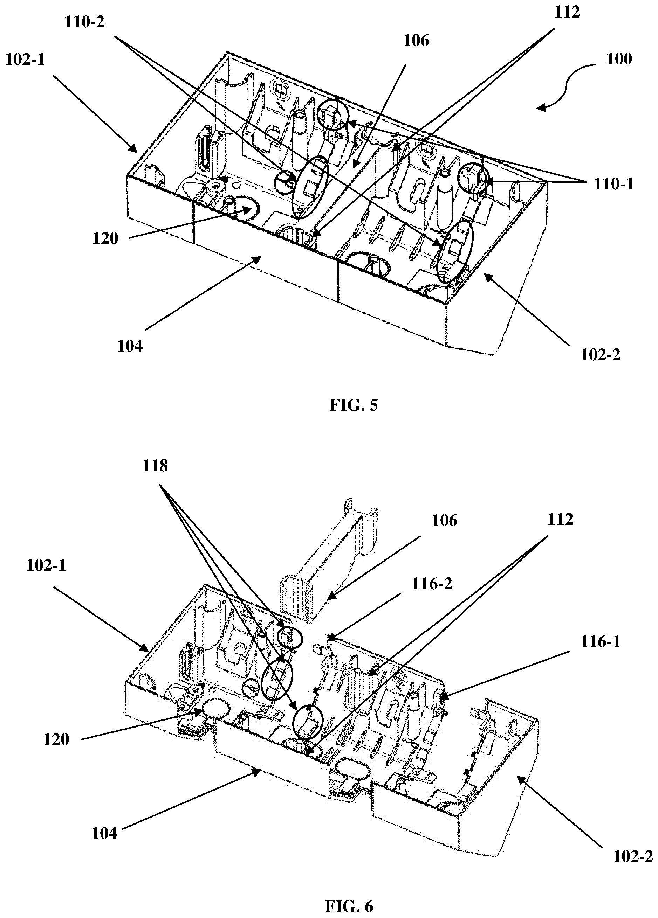

With reference to figures 1 and 5 of the accompanying drawings, the present invention as disclosed is a corner box assembly (100) used in places where plugging or unplugging is done. The corner box assembly (100) is used to accommodate electrical sockets and switches, thus helping in distribution of power. The corner box assembly (100) as disclosed in figures 1, 5 and 6 comprises of end parts (102), said end parts (102) being a first end part (102-1) and a second end part (102-2), mid parts (104), mid walls (106), a locking arrangement (110) comprising a primary locking arrangement being linear fixing snaps (110-1), a secondary locking arrangement being adjustable fixing snaps (110-2), mounting means (112) to accommodate said mid walls (106), receiving slots (118) and knock outs (120). The receiving slots (118) are staple-like in shape and hereinafter referred as staple-like receiving slots (118).

Figure 1 of the accompanying drawings illustrates the invented corner box assembly (100) for accommodating electrical sockets and switches. The corner box assembly (100) comprises of end parts (102), said end parts (102) being a first end part (102-1) and a second end part (102-2). The first end part (102-1) and second end part (102-2) are assembled together to form a corner box assembly (100). The first end part (102-1) and the second end part (102-2) are provided with knock outs (120) for electrical conduits and cable to be inserted into said corner box assembly (100).

The first end part (102-1) and second end part (102-2) are assembled together by said locking arrangement (110) (as shown in figure 2(a)). In order to assemble said corner box (100), the first end part (102-1) and the second end part (102-2) are aligned in position. The staple-like receiving slots (118) provided on one of the ends of said first end part (102-1) and second end part (102-2) are aligned with the fixing snaps (110-1,110-2) which thereof helps the user to align two of said end parts (102-1,102-2) in a prerequisite position. Once said end parts (102) are aligned in said prerequisite position, they are then assembled together by means of said locking arrangement (110).

The end parts (102) are assembled by confining the first end part (102-1) in a fixed position and aligning the second end part (102-2) with respect to the first end part (102-1) and thereby pushing the snaps into their corresponding receiving member. The second end part (102-2) is constructed with a matching profile with said first end part (102-1) i.e. second end part (102-2) is congruent and complimentarily attached with the first end part (102-1) avoiding any confusion regarding alignment. This constructional feature helps in aligning the first end part (102-1) and the second end part (102-2) when the same are attached together. The corner box assembly (100) as shown in figure 1 is provided with knock outs (120) on their rear side. These knock outs (120), when cut open, serve as entry and/or exit points for electrical cables and wires.

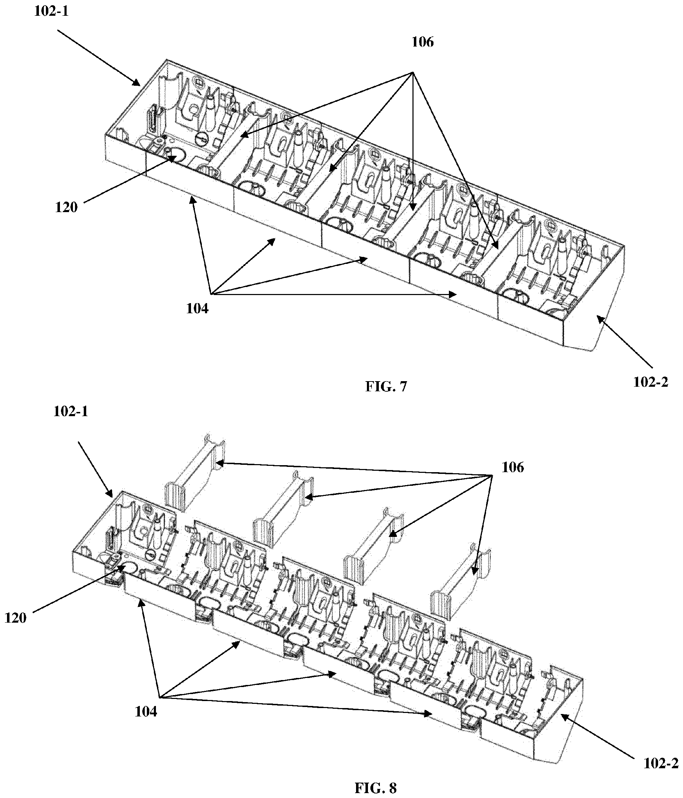

Figures 5 and 6 of the accompanying drawings illustrate the assembled view and the exploded view of said corner box assembly (100). The end parts (102) comprising the first end part (102-1) and the second end part (102-2) are assembled together to form a corner box assembly (100) as illustrated in figure 1. This corner box assembly (100) (as shown is figure 1) is a single modular design and is capable of accommodating utmost one electrical socket or one switch. If the user requires housing multiple sockets and switches in said corner box assembly (100), the length of said corner box assembly (100) is increased by adding one or more mid parts (104) (as shown in figures 5 and 7).

The mid parts (104) are provided with mid walls (106). The mid walls (106) help in strengthening or reinforcing the corner box assembly (100), thus preventing bulging effects in the mid portions of said corner box assembly (100). The adjustable fixing snaps (110-2) are provided for avoiding any loose fixation while assembling higher modularity of the invented corner box assembly (100). The mid walls (106) are substantially located at the centre of said mid parts (104). The mid parts (104) are provided with mounting means (112) for accommodating said mid walls (106). According to one embodiment of the invention, the mounting means (112) have grooves in a complimentary manner to that of the grooves provided in the engaging portion of the mid walls (106). Their grooves act out in such a way that the mid walls (106) are securely engaged with the mounting means (112) with a lap fit type locking arrangement. The mid wall(s) (106) acts as separator between the electrical devices and components such as switches, sockets and their different modules sizes. The mid parts (104) are provided with adjustable fixing snaps (110-2) acting as a self-locator provided at one engaging edge (116-1) of said mid parts (104) for aligning said mid parts (104) with second end part (102-2). Then the mid parts (104) are assembled with said first end part (102-1) by receiving the adjustable fixing snaps (110-2) protruding from the engaging edge (116-1) of said first end part (102-1) and the linear snaps (110-1).

The corner box assembly (100) is provided with a plurality of knock outs (120), said knock outs (120) are openings for electrical cable entry or exit. The corner box assembly (100) illustrated in figures 7 and 8 depicts five modular arrangement of the corner box and is assembled in following sequence : a first end part (102-1), mid part (104), mid part (104), mid part (104), mid part (104) and second end part (102-2).

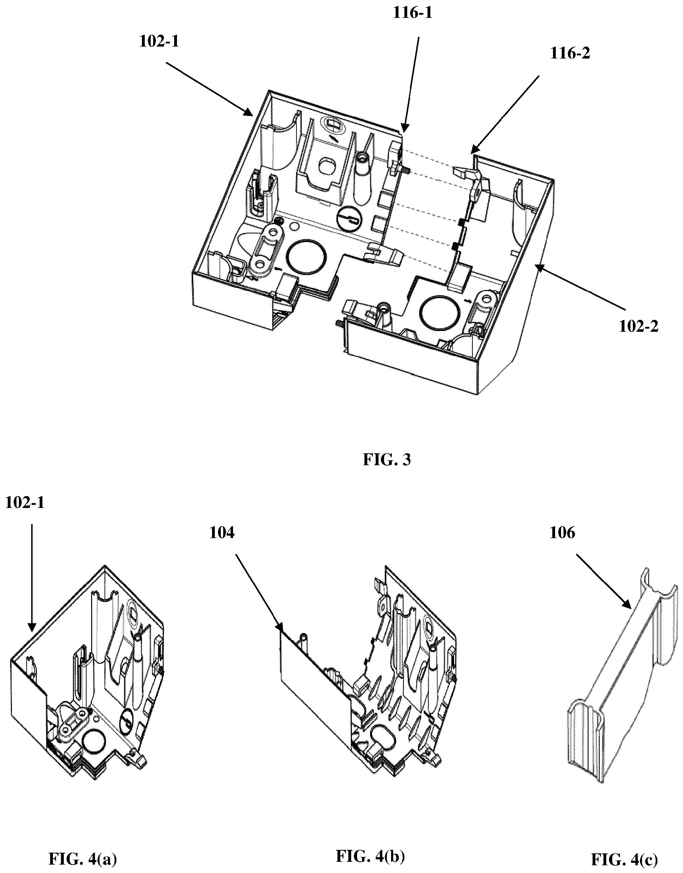

Figure 2(b) shows the enlarged and detailed view of the locking arrangement (110), said locking arrangement (110) removably couples said first end part (102-1) and said second end part (102-2). The adjustable fixing snaps (110-2) provided on said end parts (102) helps in aligning said first end part (102-1) and said second end part (102-2) in a horizontal direction. Upon aligning said end parts (102), the second end part (102-2) is pressed with respect to said first end part (102-1), thus the snap gets clipped with their corresponding receiving members thereby coupling said first end part (102-1) and said second end part (102-2) by means of said locking arrangement (110). In the above said process, the first end part (102-1) is kept fixed position whereas the second end part (102-2) is pressed or vice-versa in order to attach these two components of the corner box assembly (100). Furthermore, the second end part (102-2) is provided with staple-like receiving slots (118) for receiving the adjustable fixing snaps (110-2) and thereby aligning said first end part (102-1) and second end part (102-2) when said second end part (102-2) is engaged with the for coupling with another adjoining mid part (104) or first end part (102-1). Thus the locking arrangement (110) helps to assemble the end parts (102) rigidly at the time of installation or on the basis of user requirements. Figures 4(a), 4(b) and 4(c) of the accompanying drawings illustrate the detailed top perspective view of the various components in the invented corner box assembly (100) such as mid parts (104), end parts (102), and mid walls (106).

Figures 5 and 6 of the accompanying drawings illustrate the corner box assembly (100) with a mid part (104) and a mid wall (106). Here the length of said corner box assembly (100) is increased by adding a mid part (104). The mid part (104) is supported by a mid wall (106). The mid wall (106) reinforces the corner box assembly (100) by engaging with the mounting means (112) provided at the substantially mid position of the inner walls of said mid part (104), and thereby preventing the bulging effect of said corner box assembly (100) for high modularity. The mid part (104) is removably coupled between said end parts (102). The mid part (104) is aligned with the end parts (102) by aligning the adjustable fixing snaps (110-2) with their corresponding staple-like fixing slots (118) and thereafter assembled with the end parts (102) by means of the said locking arrangement (110).

With reference to figure 6 of the accompanying drawings, the mid parts (104) present in the corner box assembly (100) are provided with two engaging edges (116-1,116-2) and said end parts (102) present in said corner box assembly (100) is provided with an engaging edge (116-1 or 116-2). The engaging edges (116-1,116-2) present in said mid parts (104) and said end parts (102) helps in engaging said mid parts (104) and end parts (102) with an adjoining mid part (104) or end part (102). The corner box assembly (100) shown in figures 5 and 6 is a two modular arrangement and the same is assembled in the following sequence: a first end part (102-1), mid part (104) and second end part (102-2).

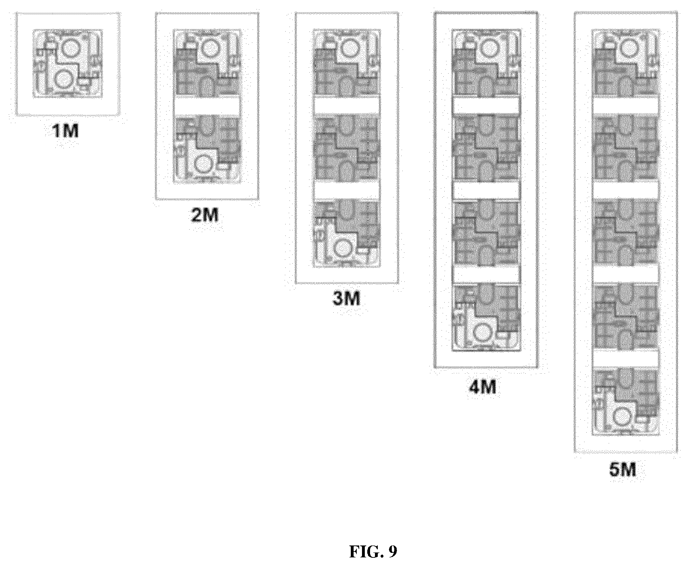

Figure 9 is an illustrative block diagram indicating the arrangement of said mid parts (104) and said end parts (102) in said corner box assembly (100). Here EP means end part(s) (102) and MP meaning mid parts (104). For a single modular design of said corner box assembly (100), end parts (102) i.e. a first end part (102-1) and a second end part (102-2) is used. As per user requirements, the length of said corner box assembly (100) can be increased by increasing the number of mid parts (104). Here in figure 9 the corner box assembly (100) up to a five modular design is displayed. The length of said corner box assembly (100) can be always increased as per user requirements by adding more number of mid parts (104).

As already mentioned the foregoing description is illustrative of the invention and not limitative to its scope.

## Claims

1. A corner box assembly (100) for housing electrical components for distribution of power and mounting at a surface where a wall meets a floor of a room for housing electrical sockets, switches and cables, said corner box assembly (100) comprising:
- at least two end parts (102) comprising a first end part (102-1) and a second end part (102-2), said first end part (102-1) being of matching profile with said second end part (102-2) to removably attach with each other and thereby form said corner box;
- one or more mid parts (104) configured to be assembled in-between said end parts (102), said mid parts (104) are adapted to attach with said end parts (102) thereby increasing the length of the corner box assembly (100); and
- mid walls (106) acting as separator between different modules of said electrical components, configured to be attached onto said mid parts (104) for reinforcing said corner box assembly (100);
wherein said mid parts (104) are provided with at least two engaging edges (116-1, 116-2) for engaging with an adjoining end part (102) or mid part (104),
wherein said end parts (102) are each provided with one engaging edge (116-1, 116-2) for engaging with an adjoining end part (102) or a mid part (104),
wherein said end parts (102) and mid parts (104) are configured to engage with adjoining mid parts (104) or end parts (102) by means of at least one locking arrangement (110),
wherein said locking arrangement (110) comprises linear fixing snaps (110-1) for rigid fixation, protruding in an outwardly manner from top and bottom parts of said engaging edges (116-1, 116-2) of the mid parts (104) and end parts (102); and adjustable fixing snaps (110-2) for relative alignment of the end and mid parts (102, 104), protruding in an outwardly manner from said engaging edges (116-1, 116-2),
wherein said engaging edges (116-1, 116-2) of said mid parts (104) further comprise receiving slots (118) to engage with said linear fixing snaps (110-1) and with said adjustable fixing snaps (110-2) for engaging with an adjoining end part (102) or mid part (104),
wherein said engaging edge (116-1, 116-2) of the second end part (102-2) and engaging edge (116-1, 116-2) of the first end part (102-1) further comprise receiving slots (118) to engage with said linear fixing snaps (110-1) and with said adjustable fixing snaps (110-2) for engaging with an adjoining end part (102) or mid part (104),
wherein said mid parts (104) are provided with grooved mounting means (112) at an inner walls configured to form a lap joint with said mid walls (106), and
wherein said mid parts (104) and end parts (102) are provided with knock outs (120) acting as provision for inserting cables and conduits.

2. The corner box assembly (100) for housing electrical components as claimed in claim 1, wherein said receiving slots (118) are staple-like receiving slots (118).

## Patentansprüche

1. Eckdosenanordnung (100) zum Aufnehmen von elektrischen Komponenten für eine Stromverteilung und zum Montieren an einer Oberfläche, wo eine Wand auf einen Boden eines Raums trifft, zum Aufnehmen von Steckdosen, Schaltern und Kabeln, die Eckdosenanordnung (100) umfassend:
- mindestens zwei Endteile (102), umfassend ein erstes Endteil (102-1) und ein zweites Endteil (102-2), wobei das erste Endteil (102-1) ein passendes Profil mit dem zweiten Endteil (102-2) aufweist, um lösbar miteinander verbindbar zu sein und dadurch die Eckdose auszubilden;
- ein oder mehrere Mittelteile (104), die konfiguriert sind, um zwischen den Endteilen (102) angeordnet zu werden, wobei die Mittelteile (104) angepasst sind, um an den Endteilen (102) befestigt zu werden, wodurch die Länge der Eckdosenanordnung (100) vergrößert wird; und
- Mittelwände (106), die als Trenner zwischen verschiedenen Modulen der elektrischen Komponenten dienen,
konfiguriert, um an den Mittelteilen (104) befestigt zu werden, zum Verstärken der Eckdosenanordnung (100);
wobei die Mittelteile (104) mit mindestens zwei Eingriffskanten (116-1, 116-2) zum Eingreifen in ein angrenzendes Endteil (102) oder Mittelteil (104) versehen sind,
wobei die Endteile (102) jeweils mit einer Eingriffskante (116-1, 116-2) zum Eingreifen in ein angrenzendes Endteil (102) oder ein Mittelteil (104) versehen sind,
wobei die Endteile (102) und Mittelteile (104) konfiguriert sind, um mittels mindestens einer Verriegelungsanordnung (110) mit angrenzenden Mittelteilen (104) oder Endteilen (102) in Eingriff zu gelangen,
wobei die Verriegelungsanordnung (110) lineare Fixierschnapper (110-1) für eine starre Fixierung umfasst, die nach außen von oberen und unteren Teilen der Eingriffskanten (116-1, 116-2) der Mittelteile (104) und Endteile (102) vorstehen; und einstellbare Fixierschnapper (110-2) für eine relative Ausrichtung der End- und Mittelteile (102, 104), die nach außen von den Eingriffskanten (116-1, 116-2) vorstehen,
wobei die Eingriffskanten (116-1, 116-2) der Mittelteile (104) ferner Empfangsschlitze (118) umfassen, um die linearen Fixierschnapper (110-1) und die einstellbaren Fixierschnapper (110-2) in Eingriff zu nehmen zum Eingreifen in ein angrenzendes Endteil (102) oder Mittelteil (104),
wobei die Eingriffskante (116-1, 116-2) des zweiten Endteils (102-2) und die Eingriffskante (116-1, 116-2) des ersten Endteils (102-1) ferner Empfangsschlitze (118) umfassen, um die linearen Fixierschnapper (110-1) und die einstellbaren Fixierschnapper (110-2) in Eingriff zu nehmen zum Eingreifen in ein angrenzendes Endteil (102) oder Mittelteil (104),
wobei die Mittelteile (104) an den Innenwänden mit genuteten Montagemitteln (112) versehen sind, die konfiguriert sind, um mit den Mittelwänden (106) eine Überlappverbindung auszubilden, und wobei die Mittelteile (104) und Endteile (102) mit Auswerfern (120) versehen sind, die als Vorkehrung zum Einführen von Kabeln und Leitungen dienen.

2. Eckdosenanordnung (100) zum Aufnehmen von elektrischen Komponenten nach Anspruch 1, wobei die Empfangsschlitze (118) klammerartige Empfangsschlitze (118) sind.

## Revendications

1. Ensemble de boîte d'angle (100) permettant de loger des composants électriques destinés à la distribution d'énergie et à un montage sur une surface où un mur rencontre un sol d'une pièce permettant de loger des prises électriques, des interrupteurs et des câbles, ledit ensemble boîte d'angle (100) comprenant :
- au moins deux parties d'extrémité (102) comprenant une première partie d'extrémité (102-1) et une seconde partie d'extrémité (102-2), ladite première partie d'extrémité (102-1) étant d'un profil correspondant à ladite seconde partie d'extrémité (102-2) pour se fixer l'une à l'autre de manière amovible et former ainsi ladite boîte d'angle ;
- une ou plusieurs parties intermédiaires (104) conçues pour être assemblées entre lesdites parties d'extrémité (102), lesdites parties intermédiaires (104) sont adaptées pour se fixer auxdites parties d'extrémité (102), augmentant ainsi la longueur de l'ensemble de boîte d'angle (100) ; et
- des parois intermédiaires (106) servant de séparateur entre les différents modules desdits composants électriques,
conçues pour être fixées sur lesdites parties intermédiaires (104) permettant de renforcer ledit ensemble de boîte d'angle (100) ;
dans lequel lesdites parties intermédiaires (104) sont pourvues d'au moins deux bords de mise en prise (116-1, 116-2) destinés à entrer en prise avec une partie d'extrémité (102) ou une partie intermédiaire (104) adjacente,
dans lequel lesdites parties d'extrémité (102) sont chacune pourvues d'un bord de mise en prise (116-1, 116-2) destiné à entrer en prise avec une partie d'extrémité (102) ou une partie intermédiaire (104) adjacente,
dans lequel lesdites parties d'extrémité (102) et parties intermédiaires (104) sont conçues pour entrer en prise avec des parties intermédiaires (104) ou des parties d'extrémité (102) adjacentes au moyen d'au moins un dispositif de verrouillage (110),
dans lequel ledit dispositif de verrouillage (110) comprend des boutons de fixation linéaires (110-1) pour une fixation rigide, faisant saillie vers l'extérieur des parties supérieure et inférieure des bords de mise en prise (116-1, 116-2) des parties intermédiaires (104) et des parties d'extrémité (102) ; et des boutons-pression de fixation réglables (110-2) pour l'alignement relatif des parties d'extrémité et intermédiaires (102, 104), faisant saillie vers l'extérieur desdits bords de mise en prise (116-1, 116-2),
dans lequel lesdits bords de mise en prise (116-1, 116-2) desdites parties intermédiaires (104) comprennent en outre des fentes de réception (118) pour entrer en prise avec lesdits boutons-pression de fixation linéaires (110-1) et lesdits boutons-pression de fixation réglables (110-2) destinés à entrer en prise avec une partie d'extrémité (102) ou une partie intermédiaire (104) adjacente,
dans lequel ledit bord de mise en prise (116-1, 116-2) de la seconde partie d'extrémité (102-2) et le bord de mise en prise (116-1, 116-2) de la première partie d'extrémité (102-1) comprennent en outre des fentes de réception (118) pour entrer en prise avec lesdits boutons-pression de fixation linéaire (110-1) et avec lesdits boutons-pression de fixation réglable (110-2) destinés à entrer en prise avec une partie d'extrémité (102) ou une partie intermédiaire (104) adjacente,
dans lequel lesdites parties intermédiaires (104) sont pourvues d'un moyen de montage rainuré (112) sur une paroi intérieure conçue pour former un joint de recouvrement avec lesdites parois intermédiaires (106), et dans lequel lesdites parties intermédiaires (104) et des parties d'extrémité (102) sont pourvues de débouchures (120) servant à l'insertion de câbles et de conduits.

2. Ensemble de boîte d'angle (100) permettant de loger des composants électriques selon la revendication 1, dans lequel lesdites fentes de réception (118) sont des fentes de réception en forme d'agrafe (118).
